# EUROPÄISCHE PATENTSCHRIFT

(11) **EP 1 764 209 B1**
(45) Veröffentlichungstag und Bekanntmachung des Hinweises auf die Patenterteilung: **15.10.2008**
(21) Anmeldenummer: 06117529.5
(22) Anmeldetag: 20.07.2006
(51) Int. Cl.: B29D 30/32, B29D 30/36

(54) **Verfahren zur Herstellung von Fahrzeugluftreifen mit geklemmtem Lagenumschlag**
Method of manufacturing a vehicle tyre having clamped turn-up's
Procédé de fabrication d'un pneumatique ayant les retournements de carcasse bloqués.

(30) Priorität: 16.09.2005 DE 102005044231
(43) Veröffentlichungstag der Anmeldung: 21.03.2007
(73) Patentinhaber: Continental Aktiengesellschaft, 30165 Hannover (DE)
(72) Erfinder: Neumann, Axel, Dr., 31559 Hohnhorst (DE); Holste, Werner, 30539 Hannover (DE); Seevers, Jörn, Dr., 31303 Burgdorf (DE); Krone, Ralf, 31559 Haste (DE)

(56) Entgegenhaltungen:
- EP-A- 1 645 403
- EP-A1- 0 953 434
- EP-A2- 1 024 033
- EP-B1- 1 232 853
- WO-A1-20/06013201

## Beschreibung

Die Erfindung betrifft ein Verfahren zur Herstellung von Fahrzeugluftreifen mit geklemmtem Lagenumschlag mit dem Oberbegriff des Patentanspruchs 1.

Bei herkömmlichen Fahrzeugreifen erstreckt sich mindestens eine Karkasslage toroidförmig von einem Laufflächenbereich über einen Seitenwandbereich nach einem Wulstbereich, und sie ist in der radialen Richtung von der Innenseite nach der Außenseite des Reifens um einen in den Wulstbereich eingebetteten, ringförmigen Wulstkern geschlungen, um ein Herausziehen von Cordfäden der Karkasse während des Betriebes des Reifens unter Belastung zu verhindern, wobei der Umstülpbereich in einen Gummibereich eingebettet und darin befestigt ist.

Bei derartigen herkömmlichen Wulstbereichsstrukturen wird jedoch ein Steifigkeitsunterschied hervorgerufen, und zwar zwischen Innenseiten und Außenseite, welche in radialer Richtung des Reifens äußere Endpositionen des Umstülpbereichs der Karkasslage begrenzen, so dass durch wiederholte Verbindungsverformung, die von einem Wulstbereich bis zu einem Seitenwandbereich reicht, und durch Umfangs-Scherverformungen während des Betrieb des Reifens unter Last die Spannung in dem äußeren Ende des Umstülpbereichs und der Umgebung davon konzentriert wird. Als Folge davon kann leicht eine Ablösung eines solchen äußeren Endes vom Gummi hervorgerufen werden, wodurch Risse im Wulstbereich auftreten können.

Ferner ist bekannt, dass der Lagenumschlag nur aufgrund prozesstechnischer Notwendigkeiten vorhanden ist. Der Lagenschlag soll, wie schon erwähnt, ein Herausziehen der Lage um den Kern verhindern. Damit es nicht zu diesem Auszug kommt, muss der Lagenumschlag eine gewisse Höhe haben; in der Regel wird er auf wenigstens 40 mm gelegt um ein Herausziehen des Lagenumschlages sicher zu vermeiden. An sich ist das Lagenumschlagende ein ungewolltes Bauteilende im Wulstbereich, welches zu Haltbarkeitsproblemen führen kann. Der Abschnitt der Karkasse, welcher den Lagenumschlag bildet, ist also ein an sich überflüssiges, aber bislang aus prozesstechnischen Gründen notwendiges Bauteil, welches entsprechend der Länge der Karkasse unnötige Kosten verursacht.

Aus der EP 1 232 853 B1 ist bereits ein Verfahren bekannt, welches die geschilderten Nachteile zu vermeiden trachtet. Hierbei wird jedoch während des Bauprozesses ein sehr kurzer Lagenumschlag um den Kern geklemmt; auf diesen wird dann wie üblich ein sogenannter Apex oder Kernreiter mit dreiecksförmigem Querschnitt aufgesetzt. Die in der EP 1 232 853 B1 aufgezeigte Lösung zeigt bereits einen Ansatz zur Lösung des Problems. Jedoch wird auch dort ein Apex eingesetzt. Der Apex ist nun ein Bauteil, das aus Stabilitätsgründen eingesetzt wird. Jedoch sind auch schon Lösungen bekannt geworden, die ohne Apex auskommen. Problematisch bei apexlosen Reifen ist aber wiederum die Haltbarkeit des Karkassumschlages am Kern bzw. ein sinnvoll einsetzbares Verfahren, um den Lagenumschlag dauerhaft haltbar und wirtschaftlich sinnvoll am Kern befestigen zu können.

Übliche Verfahren zur Herstellung von Fahrzeugluftreifen - mit oder ohne Apex - sehen ein Auflegen der Karkasse auf die Mantelfläche einer in der Regel radialen expandierbaren Bautrommel vor mit anschließenden Setzen der Kernringe auf die Karkasse an den Seiten der Bautrommeln. Seitlich angeordnete Bälge drücken anschließend die Karkasse um den Kern herum, wodurch der Lagenumschlag entsteht, und zwar mit oder ohne Apex.

Ein etwas abgewandeltes, aber ebenfalls mit Bälgen durchzuführendes Verfahren sieht die bereits erwähnte EP 1 232 853 B1 vor.

Aus der EP 1 024 033 A2 ist ebenfalls ein Verfahren bekannt geworden, bei dem ein sehr kurzer Lagenumschlag um den Kern geklemmt wird und auf den Kern anschließend ein sogenannter Apex oder Kernreiter mit dreiecksförmigem Querschnitt aufgesetzt wird. Die Klemmung des Lagenumschlages um den Kern ist jedoch aufwendig, indem zunächst die Karkassenden mittels eines speziellen Werkzeuges unter Bildung von Taschen nach radial innen rückgeführt werden, anschließend bereits auf der Aufbautrommel zwischenpositionierte Kerne in die Taschen eingeschoben werden und in einem dritten Schritt die Karkassenden um den Kern geklemmt werden.

Ziel vorliegender Erfindung ist es, ein Verfahren anzugeben, mit dem ein Ende einer Karkasse sicher am Kern geklemmt werden kann, ohne dass der Einsatz eines Apex notwendig wäre.

Diese Aufgabe wird mit einem Verfahren der eingangs geschilderten Art gelöst, welche die Merkmale des Patentanspruchs 1 aufweist.

Die gestellte Aufgabe wird also auf überraschend einfache Art und Weise dadurch gelöst, dass in einem ersten Schritt das Karkassende so um den Kern geschlagen wird, dass eine Karkassendkante an der axial innenliegenden Karkasse weitgehend horizontal anliegt, dass in einem zweiten Schritt mittels eines Werkzeuges das Karkassende nach radial innen gepresst wird, so dass das Karkassende axial außen und parallel an der axial inneren Karkassseite anliegt und den Kern umhüllt und dass in einem dritten Schritt die Karkasse mit weiteren Reifenbauteilen bombiert und dadurch das eingeklemmte Karkassende gesichert wird.

Auf überraschend einfache Art und Weise wird die Aufgabe also im Kern dadurch gelöst, dass in Abkehr von bisherigen Lösungen der Lagenumschlag bzw. die freie Karkasskante quasi um den Kern umgebördelt bzw. zwischen Karkasse und Kern hineingedrückt wird, so, als würde man ein Hemd in die Hose stopfen. Das anschließende und übliche Bombieren, d. h. das radiale Expandieren der Bautrommel mit einhergehendem Hochfahren der Karkasse, bewirkt, dass die eingeklemmte Karkasskante sicher zwischen axial innerer Karkasse und Kern gehalten wird.

In praktischen Ausgestaltungen der Erfindung kann dann vorgesehen sein, dass das Werkzeug ein Schwanenhalsroller ist. Alternativ kann vorgesehen sein, dass das Werkzeug ein Druckstempel ist.

In einer praktischen Ausgestaltung der Erfindung kann ferner vorgesehen sein, dass das Umschlagen des Karkassendes mittels eines Blähbalges erfolgt. Blähbalge haben sich ja bereits bei der Herstellung von Fahrzeugluftreifen auf Bautrommeln bewährt und sie können unterstützend zur Durchführung des erfindungsgemäßen Verfahrens verwendet werden.

In einer weiteren vorteilhaften Ausgestaltung der Erfindung kann vorgesehen sein, dass die Karkasse und der Kern in eine Tasche der Bautrommel gesetzt werden. In einer weiteren vorteilhaften Ausgestaltung dieses Gedankens kann weiterhin vorgesehen sein, dass Karkasse und Kern in eine Tasche einer Bautrommel gesetzt werden, welche eine modifizierte Schulterkontur aufweist, dergestalt, dass die Schulterlänge größer und der Winkel von Mantelfläche zur Tasche geringer ist.

In einer alternativen Ausgestaltung der Erfindung kann vorgesehen sein, dass die Karkasse und der Kern flach auf die Mantelfläche einer Bautrommel aufgelegt werden.

Weitere Vorteile und Ausgestaltungen der Erfindung werden in der Zeichnung und in den Patentansprüchen näher beschrieben. In der Zeichnung zeigt:
- Figuren 1a - 1c: die schematische Darstellung eines erfindungsgemäßen Verfahrens in einer ersten Ausführung,
- Figur 2: einen Schritt in schematischer Ansicht einer alternativen Ausgestaltung des Verfahrens
- Figuren 3a - 3c: eine gegenüber den Figuren 1a - 1c abgewandelte Variante eines erfindungsgemäßen Verfahrens, und
- Figuren 4a und 4b: eine vierte Variante in schematischer Darstellung des erfindungsgemäßen Verfahrens.

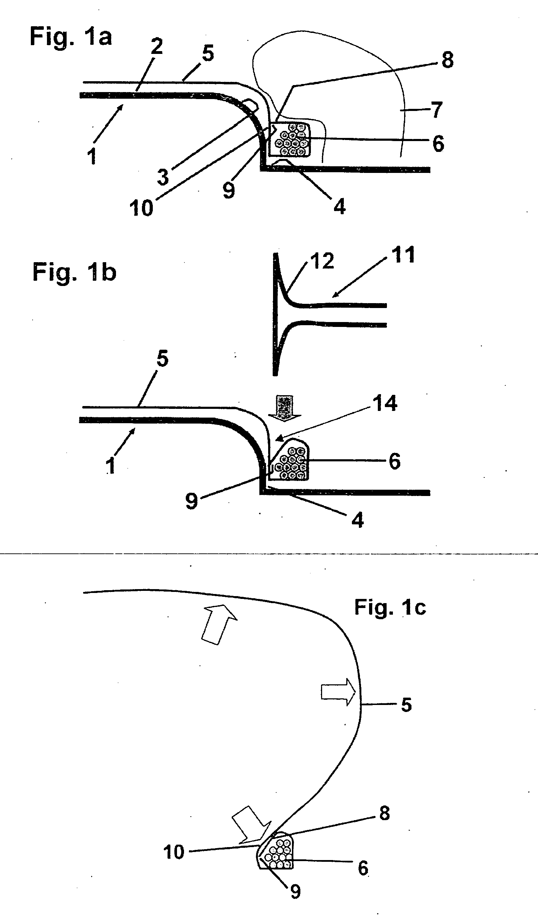

Die Figuren 1a bis 1c zeigen schematisch Verfahrensschritte einer ersten Ausgestaltungsform eines erfindungsgemäßen Verfahrens. Eine Bautrommel 1 weist eine schematisch angedeutete Mantelfläche 2 mit Schulter 3und einer Tasche 4 auf, welche das axial äußere Ende der Bautrommel 1 darstellt. Auf die Bautrommel 1 ist eine Karkasse 5 und ein Kern 6 aufgelegt. Der Kern wurde nach dem Auflegen der Karkasse 5 in die Tasche 4 eingelegt. Ein Balg 7 hat bereits ein Karkassende 8 so hochgedrückt, dass eine Karkassendkante 9 an einem axial innenliegenden Karkassbereich 10 anliegt.

In Figur 1b ist der sich anschließende Verfahrensschritt dargestellt. Mittels eines Werkzeuges 11, im gezeigten Beispiel ein Schwanenhalsanroller 12, wird das Karkassende 8 mit der Karkassendkante 9 in die Tasche hineingedrückt, derart, dass die Karkassendkante 9 möglichst tief Richtung Taschenkante 13 gedrückt wird.

Figur 1c stellt das sich anschließende Bombieren der Karkasse mit weiteren Bauteile dar. Dieses übliche Bombieren führt dazu, dass die Karkassendkante 9 endgültig in ihrer Lage gesichert wird.

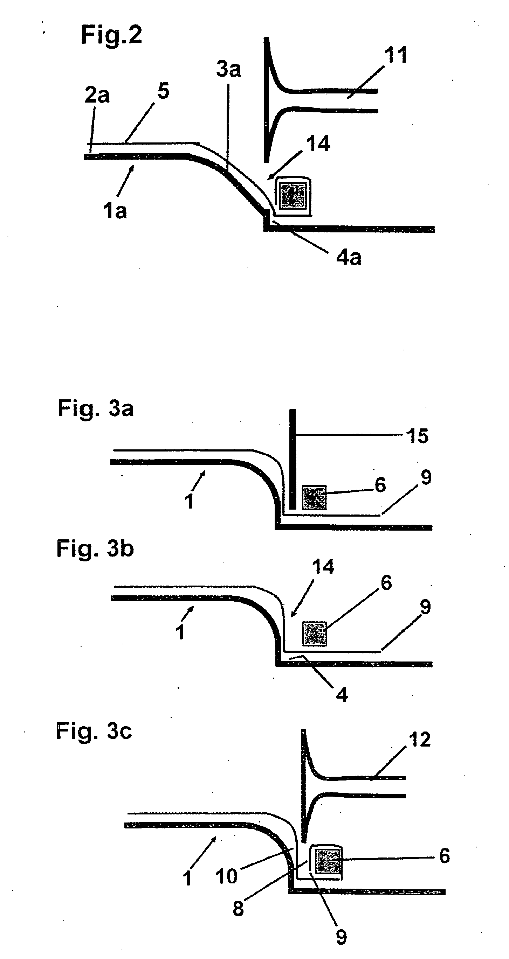

Figur 2 zeigt eine alternative Ausgestaltung. Hier ist im Wesentlichen der Schritt aus Figur 1b zu sehen, wobei allerdings die Schulter 3a der Bautrommel 1a wesentlich länger und flacher ist, als gegenüber der in Figur 1b dargezeigten Variante. Diese Variante hat den Vorteil, dass durch die modifizierte Schulterkontur der Bautrommel 1a ein Spalt 14 entsteht, in welchen der Lagenumschlag wesentlich einfacher eingerollt werden kann.

Die Figuren 3a bis 3b stellen eine weitere denkbare Ausgestaltung des erfindungsgemäßen Verfahrens dar. Bei diesem ist die Bautrommel 1 im Wesentlichen gleich zu der in den Figuren 1a bis 1c dargestellten Variante. Im Gegensatz zu den in den Figuren 1a bis 1c dargestellten Verfahrensschritten wird hier ein Distanzhalter mehr oder weniger gleichzeitig zum Setzen des Kerns eingesetzt. Dieser schafft einen definierten Spalt 14, in welchen der Schwanenhalsanroller 12 noch einfacher die Karkassendkante 9 in Richtung der Taschenkante 13 einrollen kann.

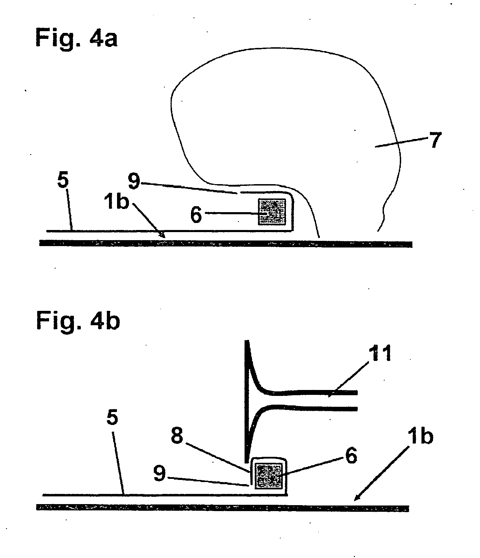

In der Figuren 4a und 4b ist eine Ausführung des erfindungsgemäßen Verfahrens dargestellt, bei dem die Karkasse 5 auf eine im Wesentlichen flachen Bautrommel 1b ohne Schulter und ohne Tasche aufgelegt wird. Auch hier drückt zunächst ein Balg 7 ein Karkassende 8 nach oben. Anschließend wird, wie in Figur 4b dargestellt wird, eine Karkassendkante 9 mittels eines Werkzeuges 11 in Richtung Karkasse 5 heruntergedrückt.

Anschließend folgt das übliche Bombieren, wodurch die Karkassendkante 9 sicher zwischen axial innerer Karkasse und dem Kern 6 eingeklemmt wird.

### Bezugszeichenliste (Teil der Beschreibung)

- 1: Bautrommel
- 2: Mantelfläche
- 3: Schulter
- 4: Tasche
- 5: Karkasse
- 6: Kern
- 7: Balg
- 8: Karkassende
- 9: Karkassendkante
- 10: Karkassbereich
- 11: Werkzeug
- 12: Schwanenhalsanroller
- 13: Taschenkante
- 14: Spalt
- 15: Distanzhalter

## Patentansprüche

1. Verfahren zur Herstellung eines Fahrzeugluftreifens, wenigstens bestehend aus einer Karkasse (5), Kernen (6), um welche herum unter Bildung eines Lagenumschlages nach axial und radial außen ein Karkassende (8) geführt ist, wobei die Karkasse (5) auf eine Mantelfläche (2;2a) einer Bautrommel (1; 1a; 1b) aufgelegt wird, wobei anschließend die Kerne (6) auf die Karkasse (5) aufgelegt werden und wobei der Lagenumschlag des Karkassendes (8) mittels außenseitig an der Bautrommel (1; 1a; 1b) angeordneter Bälge hergestellt wird,
**dadurch gekennzeichnet, dass**
in einem ersten Schritt ein Umschlagen des Karkassendes (8) um den Kern (6) erfolgt, so dass eine Karkassendkante an einem axial innenliegenden Karkassbereich (10) weitgehend horizontal anliegt, und dass in einem zweiten Schritt ein Einpressen des Karkassendes (8) mittels eines Werkzeuges (11) nach radial innen durchgeführt wird, so dass das Karkassende (8) axial außen und parallel am axial inneren Karkassbereich (10) anliegt und den Kern (6) umhüllt, und dass in einem dritten Schritt die Karkasse (5), im Bedarfsfalle mit weiteren Bauteilen, bombiert wird, dergestalt, dass die Bautrommel (1; 1a; 1b) radial expandiert wird.

2. Verfahren nach Anspruch 1, **dadurch gekennzeichnet, dass** das Einpressen des Karkassendes (8) mittels eines Schwanenhalsrollers (12) durchgeführt wird.

3. Verfahren nach Anspruch 1, **dadurch gekennzeichnet, dass** das Einpressen des Karkassendes (8) mittels eines Druckstempels durchgeführt wird.

4. Verfahren nach einem der Ansprüche 1 bis 3, **dadurch gekennzeichnet, dass** Karkasse (5) und Kern (6) in eine Tasche (4) der Bautrommel (1) gesetzt werden.

5. Verfahren nach Anspruch 4, **dadurch gekennzeichnet, dass** das Verfahren in einer modifizierten Tasche (4a) durchgeführt wird, wobei die Tasche (4a) über eine Schulter (3a) mit einer Länge von 5 mm bis 40 mm und einem Winkel von 5° bis 70° in die Mantelfläche (2a) der Bautrommel (1a) übergeht.

6. Verfahren nach Anspruch 1 bis 3, **dadurch gekennzeichnet, dass** Karkasse (5) und Kern (6) auf einer Bautrommel (1b) mit im Wesentlichen planen Mantelfläche (2) aufgelegt werden.

## Claims

1. Method of manufacturing a pneumatic vehicle tyre, comprising at least a carcass (5) and cores (6), around which an end (8) of the carcass is led axially and radially outwards while forming a ply turnup, the carcass (5) being placed onto a circumferential surface (2; 2a) of a building drum (1; 1a; 1b), the cores (6) subsequently being placed onto the carcass (5) and the ply turnup of the end (8) of the carcass being produced by means of bladders arranged on the outside of the building drum (1; 1a; 1b), **characterized in that**, in a first step, turning up of the end (8) of the carcass around the core (6) is performed, so that a carcass end edge lies largely horizontally against an axially inner carcass region (10), and **in that**, in a second step, pressing in of the end (8) of the carcass is carried out radially inwards by means of a tool (11), so that the end (8) of the carcass lies against the axially inner carcass region (10) axially on the outside and parallel and envelops the core (6), and **in that**, in a third step, the carcass (5), if need be with further components, is shaped by the building drum (1; 1a; 1b) being made to expand radially.

2. Method according to Claim 1, **characterized in that** the pressing in of the end (8) of the carcass is carried out by means of a swanneck roller (12).

3. Method according to Claim 1, **characterized in that** the pressing in of the end (8) of the carcass is carried out by means of a ram.

4. Method according to one of Claims 1 to 3, **characterized in that** the carcass (5) and the core (6) are placed in a pocket (4) of the building drum (1).

5. Method according to Claim 4, **characterized in that** the method is carried out in a modified pocket (4a), the pocket (4a) going over into the circumferential surface (2a) of the building drum (1a) over a shoulder (3a) with a length of 5 mm to 40 mm and an angle of 5° to 70°.

6. Method according to Claims 1 to 3, **characterized in that** the carcass (5) and the core (6) are placed on a building drum (1b) with a substantially planar circumferential surface (2).

## Revendications

1. Procédé de fabrication d'un bandage pneumatique pour véhicule constitué au moins d'une carcasse (5), d'âmes (6) autour desquelles une extrémité de carcasse (8) est passée axialement et radialement vers l'extérieur en formant un rabat de couche, la carcasse (5) étant placée sur une surface d'enveloppe (2 ; 2a) d'un tambour de montage (1 ; 1a ; 1b), les âmes (6) étant ensuite placées sur la carcasse (5) et le rabat de couche de l'extrémité de carcasse (8) étant réalisé à l'aide de soufflets disposés du côté extérieur sur le tambour de montage (1 ; 1a ; 1b),
**caractérisé en ce que**
dans une première étape, on rabat l'extrémité (8) de la carcasse autour de l'âme (6) de telle sorte qu'un bord d'extrémité de la carcasse repose largement à l'horizontale sur une partie axialement intérieure (10) de la carcasse, **en ce que** dans une deuxième étape, on réalise une poussée radiale vers l'intérieur de l'extrémité (8) de la carcasse au moyen d'un outil (11) de telle sorte que l'extrémité (8) de la carcasse repose axialement à l'extérieur et parallèlement sur la partie axialement intérieure (10) de la carcasse et entoure l'âme (6), et **en ce que** dans une troisième étape, la carcasse (5) est bombée, éventuellement avec d'autres composants, en dilatant radialement le tambour de montage (1 ; 1a ; 1b).

2. Procédé selon la revendication 1, **caractérisé en ce que** la poussée de l'extrémité (8) de la carcasse est réalisée au moyen d'un galet (12) à col de cygne.

3. Procédé selon la revendication 1, **caractérisé en ce que** la poussée de l'extrémité (8) de la carcasse est réalisée au moyen d'un poussoir.

4. Procédé selon l'une des revendications 1 à 3, **caractérisé en ce que** la carcasse (5) et l'âme (6) sont placées dans une poche (4) du tambour de montage (1).

5. Procédé selon la revendication 4, **caractérisé en ce que** le procédé est réalisé dans une poche (4a) modifiée, la poche (4a) se prolongeant par un épaulement (3a) d'une longueur de 5 mm à 40 mm et d'un angle de 5° à 70° en la surface d'enveloppe (2a) du tambour de montage (1a).

6. Procédé selon les revendications 1 à 3, **caractérisé en ce que** la carcasse (5) et l'âme (6) sont placées sur un tambour de montage (1b) dont la surface de l'enveloppe (2) est essentiellement plane.
